# EUROPEAN PATENT APPLICATION

(11) **EP 4 811 311 A1**
(43) Date of publication of application: **23.09.2026**
(21) Application number: 26163994.2
(22) Date of filing: 11.03.2026
(51) Int. Cl.: G06V 20/69, G06V 30/19

(54) **APPARATUS, METHOD, AND PROGRAM FOR CORRECTING FEATURES**

(30) Priority: 18.03.2025 JP 2025043180
(71) Applicant: Yokogawa Electric Corporation, Musashino-shi, Tokyo 180-8750 (JP)
(72) Inventor: Akiyoshi, Ryutaro, Tokyo, 180-8750 (JP)
(74) Representative: Hoffmann Eitle

(57) **Abstract**

Provided is an apparatus including a processor, in which the processor performs acquisition processing of acquiring a feature of each subject detected from an image of a subject that is a cell or a microorganism, first determination processing of determining whether or not distributions of a plurality of features, including the feature, follow a reference distribution, and correction processing of correcting the plurality of features so as to follow the reference distribution, when the distributions of the plurality of features do not follow the reference distribution, the reference distribution is a normal distribution, and in the first determination processing, a determination is made using at least one of a Shapiro-Wilk test, a Kolmogorov-Smimov test, an Anderson-Darling test, a D'Agostino's K-squared test, a Jarque-Bera test, or a Lillifors test.

## Description

### BACKGROUND

### 1. TECHNICAL FIELD

The present invention relates to an apparatus, a method, and a program for correcting a feature.

### 2. RELATED ART

Patent Documents 1 to 3 describe that "t-test performed by setting a ratio of a value greater than or equal to the Z value or less than or equal to the Z value in a standard normal distribution as a significance probability (p value)" (paragraph 0035 of Patent Document 1) or the like.

### RELATED ART DOCUMENTS

### Patent Documents

Patent Document 1: Japanese Patent Application Publication No. 2006-329780
Patent Document 2: Japanese Patent Application Publication No. 2012-175946
Patent Document 3: Japanese Patent Application Publication No. 2002-528095

### SUMMARY

(1) According to a first aspect of the present invention, provided is an apparatus including a processor, and the processor performs acquisition processing of acquiring a feature of each subject detected from an image of a subject that is a cell or a microorganism, first determination processing of determining whether or not distributions of a plurality of features, including the feature, follow a reference distribution, and correction processing of correcting the plurality of features so as to follow the reference distribution, when the distributions of the plurality of features do not follow the reference distribution. A feature may be a parameter indicating a shape, texture, or an internal state of a subject as a target of a data group.
(2) In the above-described apparatus of (1), the reference distribution may be a normal distribution.
(3) In the above-described apparatus of (2), in the first determination processing, a determination may be made using at least one of a Shapiro-Wilk test, a Kolmogorov-Smirnov test, an Anderson-Darling test, a D'Agostino's K-squared test, a Jarque-Bera test, or a Lillifors test.
(4) In the above-described apparatus of (2) or (3), in the correction processing, correction may be performed for the plurality of features by at least one of logarithmic transformation, square root transformation, Box-Cox transformation, reciprocal transformation, rank transformation, Yeo-Johnson transformation, or transformation using a generator which is generated using a GAN and generates output data following the reference distribution from input data not following the reference distribution.
(5) In the above-described apparatus of (4), the processor may repeat the correction processing until it is determined by the first determination processing that the distributions of the plurality of features follow the reference distribution.
(6) In the above-described apparatus of (4) or (5), in the correction processing, correction may be further performed by removing outliers for the plurality of features.
(7) In the above-described apparatus of any one of (4) to (6), the processor may further perform training processing in which the generator and a discriminator which discriminates whether or not the output data follows the reference distribution are each trained by the GAN.
(8) According to a second aspect of the present invention, provided is an apparatus including a processor, and the processor performs training processing in which a generator which generates output data of a reference distribution from input data not following the reference distribution and a discriminator which discriminates whether or not the output data follows the reference distribution are each trained by a GAN.
(9) In the above-described apparatus of (7) or (8), the processor may further perform second determination processing of determining, by a predetermined test, whether or not output data, which is output from the generator in response to input data not following the reference distribution being supplied to the generator, follows the reference distribution, and the generator and the discriminator may be retrained by the training processing based on a determination result by the second determination processing.
(10) In the above-described apparatus of (9), the processor may perform change processing of changing a hyperparameter in training when retraining the generator and the discriminator. In the change processing, at least one of a learning rate, a number of at least one epoch, a number of at least one dimension of a hidden layer, or the like in the training may be changed.
(11) In the above-described apparatus of (9) or (10), when it is determined by the second determination processing that the output data follows the reference distribution, the processor may retrain the generator and the discriminator based on a degree of approximation of distribution states of the input data and the output data of the generator.
(12) In the above-described apparatus of any one of (7) to (11), in the training processing, the generator may be trained such that a value of a loss function including a regularization term corresponding to a distance between input data to the generator and output data from the generator decreases.
(13) In the above-described apparatus of any one of (1) to (12), in the acquisition processing, a plurality of types of features may be acquired for each subject, in the first determination processing, a determination may be made for each type of feature, and in the correction processing, a plurality of features of a type not following the reference distribution, among a plurality of features of each type, may be corrected.
(14) According to a third aspect of the present invention, provided is a method including: acquiring a feature of each subject detected from an image of a subject that is a cell or a microorganism; performing a first determination by determining whether or not distributions of a plurality of features, including the feature, follow a reference distribution; and correcting the plurality of features so as to follow the reference distribution, when the distributions of the plurality of features do not follow the reference distribution.
(15) According to a fourth aspect of the present invention, provided is a method including training, by a GAN, each of a generator which generates output data of a reference distribution from input data not following the reference distribution and a discriminator which discriminates whether or not the output data follows the reference distribution.
(16) According to a fifth aspect of the present invention, provided is a program which, when executed by a computer, causes the computer to perform operations including: acquiring a feature of each subject detected from an image of a subject that is a cell or a microorganism; performing a first determination by determining whether or not distributions of a plurality of features, including the feature, follow a reference distribution; and correcting the plurality of features so as to follow the reference distribution, when the distributions of the plurality of features do not follow the reference distribution.
(17) According to a sixth aspect of the present invention, provided is a program which, when executed by a computer, causes the computer to perform operations including: training, by a GAN, each of a generator which generates output data of a reference distribution from input data not following the reference distribution and a discriminator which discriminates whether or not the output data follows the reference distribution.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an apparatus 1 according to an embodiment.
Fig. 2 illustrates a data file 121.
Fig. 3 illustrates an operation of the apparatus 1.
Fig. 4 illustrates another operation of the apparatus 1.
Fig. 5 illustrates a method of generating a subject group.
Fig. 6 illustrates a method of capturing a subject group.
Fig. 7 illustrates a determination result of a distribution for a feature acquired for cells cultured under each condition.
Fig. 8 illustrates features before and after transformation by Yeo-Johnson transformation.
Fig. 9 illustrates a determination result of a distribution for a transformed feature.
Fig. 10 illustrates feature data of an area and circularity.
Fig. 11 illustrates a feature after transformation.
Fig. 12 illustrates distributions of feature data before and after transformation;
Fig. 13 illustrates a tip shape of a subject.
Fig. 14 illustrates a hole shape of the subject.
Fig. 15 illustrates a ridge shape of the subject.
Fig. 16 illustrates a valley shape of the subject.
Fig. 17 illustrates an edge shape of the subject.
Fig. 18 illustrates a saddle shape of the subject.
Fig. 19 illustrates an example of a computer 1200 in which a plurality of aspects of the present invention may be embodied in whole or in part.

### DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

### (Apparatus 1)

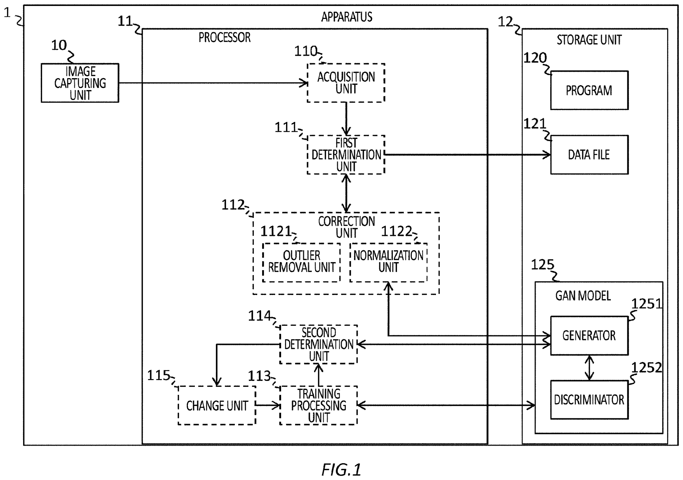

Fig. 1 illustrates an apparatus 1 according to the present embodiment. The apparatus 1 acquires data of a reference distribution, and includes an image capturing unit 10, a processor 11, and a storage unit 12. Note that in the present embodiment, as an example, the reference distribution may be a normal distribution.

### ((Image capturing unit 10))

The image capturing unit 10 captures a sample.

Here, in the sample, cells or microorganisms as a subject may be dispersed therein. As an example, the sample may be a culture medium of cells. The cells may be dispersed in a two-dimensional plane or in a three-dimensional space. The cells may be derived from a human or from another organism. As an example, the cells may be iPS cells (induced pluripotent stem cells) subjected to differentiation treatment, and may include at least one of an undifferentiated cell or a differentiated cell. However, a type of the cells is not limited thereto, and the cells may also be embryonic stem (ES) cells, mesenchymal stem (MS) cells, neural stem cells, hematopoietic stem cells, muscle stem cells, epithelial stem cells, adipose-derived stem (ADS) cells, liver stem cells, intestinal stem cells, spermatogonial stem (SS) cells, or lung stem cells.

The image capturing unit 10 may capture the sample in a state where the subject is non-destructive and unstained. The subject being non-destructive may mean that destruction processing is not performed on each part of the subject. The subject being unstained may mean that staining processing is not performed on each part of the subject.

The image capturing unit 10 may include a microscope for enlarging and capturing a subject. The microscope may be any type of microscope, such as, for example, a bright field microscope. The image capturing unit 10 may supply a captured image of the subject group to an acquisition unit 110 described later. Although details will be described later, the acquisition unit 110 may thereby acquire a feature for each subject.

### ((Storage unit 12))

The storage unit 12 stores various types of information. The storage unit 12 according to the present embodiment may store a program 120, a data file 121, and a generative adversarial networks (GAN) model 125.

### (((Program 120)))

The program 120 is executed by the processor 11 to cause the processor 11 to perform various types of processing.

### (((Data file 121)))

The data file 121 stores data acquired by the acquisition unit 110 and a correction unit 112 described later. In the present embodiment, as an example, the data file 121 may store normally distributed data. Accordingly, the data in the data file may be subjected to statistical analysis based on an assumption of a normal distribution. Examples of the analysis method based on an assumption of a normal distribution include analysis of variance (ANOVA), analysis of covariance (ANCOVA), multivariate analysis of variance (MANOVA), iterative measurement ANOVA, t-test, analysis using Pearson's product factor correlation coefficient, linear regression analysis (OLS regression), analysis using a parametric confidence interval or prediction interval, analysis using a statistic, or the like. The statistic may be a representative value of a distribution (as an example, a minimum, a maximum, a median, a mean, or a mode) or a measure of dispersion of the distribution (as an example, a variance or a standard deviation).

### (((GAN model 125)))

The GAN model 125 has a model of a generator 1251 and a discriminator 1252 generated using a generative adversarial networks (GAN).

### (((Generator 1251)))

The generator 1251 generates normally distributed output data from non-normally distributed input data.

Here, the input data may include one set of data (also referred to as one piece of data) corresponding to data of one type of feature of a subject, or may include a plurality of sets of data (also referred to as a plurality of pieces of data) corresponding to data of a plurality of types of features of the subject. For example, the input data may be a collection of a plurality of vectors including an element corresponding to a value for each type of feature for one subject. As an example, when the input data includes k (here, k is an integer of 2 or more) pieces of data, each vector may include k elements corresponding to values of first to k-th features for a corresponding subject. In this case, the input data may include as many vectors of k elements as a number of at least one subject, and may include data of the first feature through data of the k-th feature as an element group of a first index through an element group of a K-th index in the vector.

Similarly, the output data may include one piece of data corresponding to data of one type of feature of a subject, or may include a plurality of pieces of data corresponding to data of a plurality of types of features of the subject. For example, the output data may be a collection of a plurality of vectors including an element corresponding to a value for each type of feature for one subject. Each data included in the output data may be normally distributed data.

When input data including one or more pieces of data is input, the generator 1251 may output output data including one or more pieces of normally distributed data generated from each data. As an example, when input data in which vectors including elements for each data are collected is input, the generator 1251 may output output data in which vectors are collected.

### ((((Discriminator 1252))))

The discriminator 1252 discriminates whether or not output data from the generator 1251 is normally distributed. When output data including a plurality of pieces of data is output from the generator 1251, the discriminator 1252 may discriminate whether or not each data is normally distributed.

### ((Processor 11))

The processor 11 performs various types of processing by executing the program 120 stored in the storage unit 12. The processor 11 may implement a functional unit which performs various types of processing by executing the program 120. The processor 11 according to the present embodiment may implement the acquisition unit 110, a first determination unit 111, the correction unit 112, a training processing unit 113, a second determination unit 114, and a change unit 115.

### (((Acquisition unit 110)))

The acquisition unit 110 acquires a feature of each subject detected from an image. The acquisition unit 110 may acquire a plurality of types of features for each subject. In the present embodiment, as an example, the acquisition unit 110 may acquire, for each image and for each type of feature, feature data including the type of feature for each of a plurality of subjects in the image. The acquisition unit 110 may analyze one or more images supplied from the image capturing unit 10 to detect a subject in the image, and may specify a plurality of types of feature values for each subject detected. The acquisition unit 110 may generate, for each image and for each type of feature, feature data by collecting feature values. Note that arrangement of features in each type of feature data may be arrangement corresponding to identification information of a subject, and as an example, when 1 to n pieces of identification information are attached to n subjects, first, second, ..., n-th features of feature data may be features of subjects of the identification information "1", "2", ..., "n".

Here, the target indicated by the feature data may be a subject group, and may be a cell group as an example. Targets indicated by the feature data may belong to separate classifications according to at least one of types or states of the targets. As an example, a target as a cell group may belong to different classifications depending on whether the cell group is normal or abnormal, may belong to different classifications depending on a cell cycle of the cell group, may belong to different classifications depending on an expressed gene, may belong to different classifications depending on an expression level of a specific gene, may belong to different classifications depending on a generation level of a specific protein, or may belong to different classifications depending on a differentiation state from iPS cells or hematopoietic stem cells (HPC).

The feature may be a parameter indicating a shape, texture, an internal state, or the like of a subject.

The feature indicating the shape (also referred to as a feature of the shape) may include at least one of an area (µm²), a diameter (µm), a perimeter (µm), circularity, a compactness measure, asymmetry, boundary smoothness, a skeleton length, a ratio of a major axis and a minor axis, a skeletonized length, a branching number, or a branch number. The diameter may be a longest length or a shortest length among straight lines passing through a center of a cell. The perimeter may be a length of a contour of the cell and is also referred to as the circumferential length. The compactness measure may be an index indicating how much an internal structure (cytoplasm, nucleus, or the like) of the cell is clogged, and is also referred to as compactness. The asymmetry may be an index of low symmetry of a cell shape. The boundary smoothness may be an index indicating how uniform a shape of a cell membrane is or whether irregular deformation does not occur in the cell membrane, and may be calculated from an expression of smoothness = (length of cell boundary)²/(4π·area of cell). The skeleton length may be a length of a line passing through a center portion of the cell, and when the cell is branched, the skeleton length may be a length obtained by connecting center lines of respective branch portions. The ratio of the major axis to the minor axis may be a ratio of a length in a major axis direction of the cell to a length in a minor axis direction of the cell, and is also referred to as an anisometry. The branching number may be a number of at least one branch point, and the branch number may be a number of at least one branch at a tip of a branch.

The texture of the subject may be markings or a pattern exhibited by the subject, or may be generated by a shape of a capturing target in an image capturing direction. A feature indicating the texture of the subject (also referred to as a feature of texture) may be a number of at least one region indicating the corresponding texture in the subject. The feature of the texture may be, for example, at least one type of a number of at least one texture indicating a tip shape (Peak), a number of at least one texture indicating a hole shape (Hole), a number of at least one texture indicating a ridge shape (Ridge), a number of at least one texture indicating a valley shape (Valley), a number of at least one texture indicating an edge shape (Edge), a number of at least one texture indicating a saddle shape (Saddle), or the like. Each texture will be described later in detail.

When the subject is a cell or a microorganism, the feature indicating the internal state may include at least one of an area of the nucleus, the circularity of the nucleus, a nuclear to cytoplasmic ratio (also referred to as N/C ratio), a granularity distribution in the subject, or a polarization direction of the subject. The N/C ratio may be a ratio occupied by the nucleus in the subject, and may be calculated from an expression of N/C ratio = area of nucleus/(area of entire subject - area of nucleus). When the subject is a cell, the granularity distribution in the subject may be an index indicating at least one of a mean µ_d or a variance σ_d² of a distribution of granular structures existing inside the cytoplasm or inside the nucleus. The mean µ_d of the distribution may be calculated by an expression of µ_d = (1/N)Σd_i (where "d_i" is a diameter of an i-th particle, and N is a number of at least one particle), and the variance σ_d² of the distribution may be calculated by an expression of σ_d² = (1/N)Σ(d_i - µ_d)². The polarization direction of the subject may be an index indicating a direction in which the subject is aligned or elongated. A polarization direction θ may be calculated by an expression of θ = (1/2)tan⁻¹(2M_xy/(M_xx - M_yy). In the expression, "M_xx", "M_yy", and "M_xy" may be second moments of a subject shape calculated by equations of M_xx = Σ(x - x^{*})², M_yy = Σ(y - y^{*})², and M_xy = Σ(x - x*)(y - y*), "x" and "y" may be an x coordinate and a y coordinate on a contour of the subject, and "x*" and "y*" may be barycentric coordinates of the subject (that is, a center of a subject region). The polarization direction θ may be a direction of a first principal component obtained by performing principal component analysis using the second moment as a covariance matrix. The polarization direction θ may indicate that when it is close to 0, the subject is oriented in an x axis direction, when it is close to ±90, the subject is oriented in a y axis direction, and when it is ±45, the subject is elongated in a diagonal direction.

The feature may indicate a value corresponding to a temporal change in a state of the subject. For example, the feature may indicate a value corresponding to a temporal change or periodicity of the change in the parameter indicating the shape, the texture, the internal state, or the like of the subject. Additionally or alternatively, the feature may indicate at least one of a moving speed, a rotation speed, a moving direction, a moving pattern, an index value of collective migration of the subject, an index value of division of the subject, or an index value of fusion of the subject. The moving direction may be used as the feature in a state of a direction vector in an image, for example, a combination of a vertical component and a horizontal component. The moving pattern may be used as the feature in a state of a combination of moving directions of the subject at three or more time points. An evaluation value of the collective migration may indicate synchrony or coordination of a speed and a moving direction of a target subject with respect to a surrounding subject, in other words, cohesion of collective movement, and as an example, may be an angular difference between a velocity vector of a target cell and an average velocity vector of neighboring cells, or may be an inner product of unit vectors obtained by normalizing these vectors. The index value of division or fusion of the subject may indicate a frequency of occurrence of division or fusion for a target subject, and may be, for example, a number of at least one occurrence per unit time, an occurrence rate, or an occurrence rate. The index value of division or fusion of the subject may indicate presence or absence of occurrence of division or fusion for a target subject. Note that the value corresponding to the temporal change in the state of the subject may be calculated by analyzing a plurality of images (for example, individual images obtained by time-lapse imaging).

When acquiring data including a plurality of types of features, the acquisition unit 110 may acquire the data including the plurality of types of features in a state of being standardized on a common scale. For example, the acquisition unit 110 may standardize each type of feature acquired, such that a mean is 0 and a variance is 1, and acquire feature data including the standardized feature. The acquisition unit 110 may standardize each feature using a following expression.$Standardized feature = \left(x-μ\right) / σ$ In the expression, "x" may be a feature value before standardization, "µ" may be a mean of the feature before standardization, and "σ" may be a standard deviation of the feature before standardization.

The acquisition unit 110 may supply acquired feature data to the first determination unit 111. The acquisition unit 110 may supply the feature data to the first determination unit 111 in association with identification information of an image or identification information of a well in which a cell group as a subject is cultured. The identification information of the well may be supplied from a user via an input apparatus (not illustrated). The acquisition unit 110 may supply a feature value in the feature data to the first determination unit 111 in association with identification information of a subject in an image or position information of the subject.

### (((First determination unit 111)))

The first determination unit 111 determines whether or not distributions of a plurality of features acquired by the acquisition unit 110 follow a normal distribution. The first determination unit 111 may determine whether or not distributions of a plurality of features included in feature data follow a normal distribution. The first determination unit 111 may make a determination for each type of feature.

The first determination unit 111 may make a determination by using at least one of a Shapiro-Wilk test, a Kolmogorov-Smirnov test, an Anderson-Darling test, a D'Agostino's K-squared test, a Jarque-Bera test, or a Lillifors test. As an example, in the determination using the Shapiro-Wilk test, the Kolmogorov-Smirnov test, the D'Agostino's K-squared test, or the like, with a null hypothesis "a distribution of values follows a normal distribution" and an alternative hypothesis "a distribution of values does not follow a normal distribution", it may be determined that the distribution follows a normal distribution when a p value is 0.05 or more, and the distribution follows a non-normal distribution when the p value is less than 0.05.

The first determination unit 111 may supply, to the correction unit 112, feature data determined not to be normally distributed. The first determination unit 111 may store, in the data file 121 of the storage unit 12, feature data determined to be normally distributed. The first determination unit 111 may store, in the data file 121, information (as an example, identification information of an image, identification information or position information of a subject, or the like) added to the feature data by the acquisition unit 110 together with the feature data.

### (((Correction unit 112)))

When the distributions of the plurality of features acquired by the acquisition unit 110 do not follow a normal distribution, the correction unit 112 corrects the plurality of features so as to follow a normal distribution. When the distributions of the plurality of features included in the feature data do not follow a normal distribution, the correction unit 112 may correct the plurality of features so as to follow a normal distribution. The correction unit 112 may correct, among feature data for each type, the feature data of a type that is not normally distributed. The correction unit 112 may supply the corrected feature data to the first determination unit 111.

The correction unit 112 includes an outlier removal unit 1121 and a normalization unit 1122. The outlier removal unit 1121 performs correction by removing outliers for a plurality of features. The outlier removal unit 1121 may detect an outlier of a feature in the feature data by a conventionally known method such as a 3σ method. The outlier removal unit 1121 may delete the detected feature or replace the detected feature with another value such as a mean or a median. The outlier removal unit 1121 may perform outlier removal at least one of a stage before correction by the normalization unit 1122 or a stage after the correction.

The normalization unit 1122 may perform correction by transformation using the generator 1251. As described above, the generator 1251 may generate normally distributed output data from non-normally distributed input data, and may be generated by the training processing unit 113 described later. The normalization unit 1122 may supply feature data to the generator 1251 and acquire normally distributed feature data from the generator 1251. The normalization unit 1122 may collectively supply, to the generator 1251, feature data of each type that is not normally distributed and acquire each normally distributed feature data from the generator 1251. As an example, the normalization unit 1122 may supply, to the generator 1251, input data in which feature vectors including, as an element, a feature of each feature data that is not normally distributed are collected, and may acquire, from the generator 1251, output data in which feature vectors including, as an element, a feature of each normally distributed feature data are collected.

Additionally or alternatively, the normalization unit 1122 may perform correction for a plurality of features included in feature data, by at least one of logarithmic transformation (loglp transformation), square root transformation (sqrt transformation), Box-Cox transformation, reciprocal transformation, rank transformation, or Yeo-Johnson transformation. Here, the logarithmic transformation may be transformation in which a value x is log(1 + x). The square root transformation may be transformation in which the value x is √x. The rank transformation may be transformation that replaces a magnitude of a value with a hierarchy (rank).

### ((Training processing unit 113)))

The training processing unit 113 trains each of the generator 1251 and the discriminator 1252 by the GAN. The training processing unit 113 may perform training processing of the generator 1251 and the discriminator 1252 in the GAN model 125 stored in the storage unit 12. The training processing unit 113 may perform training processing of the generator 1251 such that output data discriminated as normally distributed by the discriminator 1252 is generated from non-normally distributed input data, and may perform training processing of the discriminator 1252 such that output data by the generator 1251 is discriminated as not normally distributed.

Here, the training processing unit 113 may train the generator 1251 such that a value of a loss function including a regularization term (also referred to as a penalty term) corresponding to a distance between input data to the generator 1251 and output data from the generator 1251 decreases. The distance between the input data and the output data may be, for example, a Euclidean distance. When the input data and the output data are each a collection of vectors including elements for each data, the distance between the input data and the output data may be a sum of distances between vectors. The loss function may indicate whether or not the generator 1251 can deceive the discriminator 1252. The training processing unit 113 may train the generator 1251 and the discriminator 1252 by unsupervised learning, but may train the discriminator 1252 by supervised learning using, as training data, feature data to which a tag indicating a determination result by the first determination unit 111 is attached. The training processing unit 113 may perform training processing by a known learning algorithm such as a neural network. The training processing unit 113 may supply a trigger signal corresponding to an end of training to the second determination unit 114.

### (((Second determination unit 114)))

The second determination unit 114 make a determination regarding the generator 1251 in a training stage of the generator 1251 and the discriminator 1252.

The second determination unit 114 may determine, by a predetermined test, whether or not the output data, which is output from the generator 1251 in response to non-normally distributed input data being supplied to the generator 1251, is normally distributed. The second determination unit 114 may read non-normally distributed data from the storage unit 12 or may newly generate the data. The second determination unit 114 may supply non-normally distributed input data to the generator 1251, and may acquire output data of the generator 1251. The second determination unit 114 may make a determination using at least one of the Shapiro-Wilk test, the Kolmogorov-Smirnov test, the Anderson-Darling test, the D'Agostino's K-squared test, the Jarque-Bera test, or the Lillifors test. The second determination unit 114 may make a determination using a test similar to that of the first determination unit 111, or may make a determination using a test different from that of the first determination unit 111. In response to the output data not being normally distributed, the second determination unit 114 may supply a trigger signal indicating this to the change unit 115.

When the output data from the generator 1251 is determined to be normally distributed, the second determination unit 114 may determine whether or not a degree of approximation in distribution state between input data and output data of the generator 1251 is greater than or equal to an allowable degree of approximation. When the input data and the output data are each a collection of vectors including elements for each data, the distribution state of the data may have a cluster structure in which the vectors are clustered. The second determination unit 114 may make a determination based on a result of clustering vectors. The second determination unit 114 may perform clustering of vectors by clarifying a distribution state while maintaining data similarity by t-distributed stochastic neighbor embedding (t-SNE). When vectors included in the input data and the output data are three-dimensional or more, the second determination unit 114 may perform clustering of vectors reduced in dimensionality by t-SNE. The second determination unit 114 may calculate a land index or an adjusted land index as a degree of approximation between cluster structures, or may calculate a value corresponding to a distance between cluster centers or an intra-cluster dispersion. The allowable degree of approximation may be set to an arbitrary value. In response to the degree of approximation between cluster structures being less than the allowable degree of approximation, the second determination unit 114 may supply a trigger signal indicating this to the change unit 115.

### (((Change unit 115)))

The change unit 115 changes setting content of training processing in a case of retraining the generator 1251 and the discriminator 1252.

The change unit 115 may change a hyperparameter in training in response to the trigger signal, which indicates that the output data from the generator 1251 is not normally distributed, being supplied from the second determination unit 114. In the present embodiment, as an example, the change unit 115 may change at least one of a learning rate, a number of at least one epoch, a number of at least one dimension of a hidden layer, or the like.

The change unit 115 may change a maximum number of trials of training of the generator 1251 and the discriminator 1252 in response to the trigger signal, which indicates that the degree of approximation in distribution state between the input data and the output data of the generator 1251 (in the present embodiment, the degree of approximation between cluster structures as an example) is less than the allowable degree of approximation, being supplied from the second determination unit 114. The maximum number of trials will be described later in detail.

The change unit 115 may cause the training processing unit 113 to train the generator 1251 and the discriminator 1252 according to the changed setting content. Accordingly, the generator 1251 and the discriminator 1252 are retrained by the training processing unit 113 based on a determination result by the second determination unit 114.

According to the apparatus 1 described above, when distributions of a plurality of features including a feature for each subject do not follow the reference distribution, the plurality of features are corrected to follow the reference distribution. Therefore, a subject group for each image can be appropriately evaluated.

In addition, since the reference distribution is a normal distribution, the subject group for each image can be evaluated using statistical analysis based on an assumption of a normal distribution.

In addition, whether or not the distribution of the feature follows a normal distribution is determined by using at least one of the Shapiro-Wilk test, the Kolmogorov-Smirnov test, the Anderson-Darling test, the D'Agostino's K-squared test, the Jarque-Bera test, or the Lillifors test. Therefore, it is possible to accurately determine whether or not the distribution of the feature follows a normal distribution.

In addition, correction for a plurality of features is performed by at least one of logarithmic transformation, square root transformation, Box-Cox transformation, reciprocal transformation, rank transformation, or Yeo-Johnson transformation, or transformation by the generator 1251. Therefore, the distribution of the feature can be reliably corrected to a normal distribution.

In addition, correction for a plurality of features is further performed by removing outliers. Therefore, the distribution of feature can be more reliably corrected to a normal distribution.

In addition, the generator 1251 which generates normally distributed output data from non-normally distributed input data and the discriminator 1252 which discriminates whether or not the output data is normally distributed are each trained by the GAN. Therefore, the generator 1251 which generates normally distributed output data from non-normally distributed input data can be acquired and used to correct the distribution of the feature.

In addition, the generator 1251 and the discriminator 1252 are retrained based on a determination result as to whether or not output data output from the generator 1251 is normally distributed. Therefore, the generator 1251 which reliably generates normally distributed output data from non-normally distributed input data can be acquired and used to correct the distribution of the feature.

In addition, when the generator 1251 and the discriminator 1252 are retrained, a hyperparameter in training is changed. Therefore, an accuracy of the generator 1251 and a speed of training can be adjusted.

In addition, when it is determined that the output data from the generator 1251 is normally distributed, the generator 1251 and the discriminator 1252 are retrained based on a degree of approximation in distribution state between the input data and the output data. Therefore, the generator 1251 in which the distribution state is maintained can be generated.

In addition, the generator 1251 is trained such that a value of a loss function including a regularization term corresponding to a distance between input data to the generator 1251 and output data from the generator 1251 decreases. Therefore, the generator 1251 which generates normally distributed output data from non-normally distributed input data while reducing a difference between the input data and the output data can be acquired and used to correct the distribution of the feature.

In addition, a plurality of types of features are acquired for each subject, a determination is made for each type of feature, and a plurality of features of a type that is not normally distributed are corrected. Therefore, a subject group for each image can be more appropriately evaluated using the plurality of types of features.

### (Data file 121)

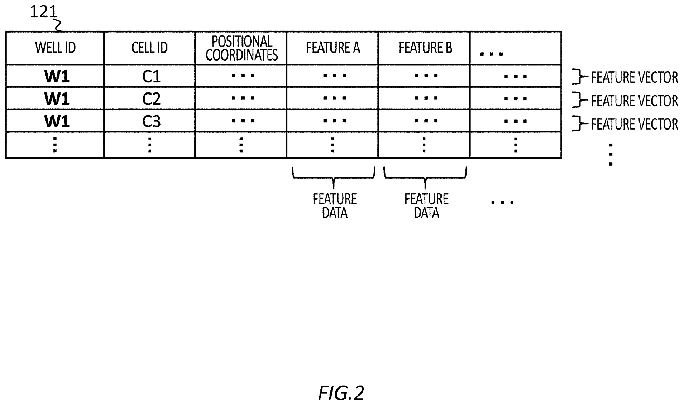

Fig. 2 illustrates a data file 121. The data file 121 may store normally distributed data for each type of feature. Note that, in the data file 121 of the present drawing, for each cell as a subject, identification information of a well in which the cell is cultured, identification information of the cell, a position of the cell in the image, and a value of each feature are stored, and each feature data of "feature A" and "feature B" is normally distributed data. In addition, in the data file 121 of the present drawing, a value of each feature for each cell indicates a feature vector.

### (Operation)

### ((Training of GAN Model 125))

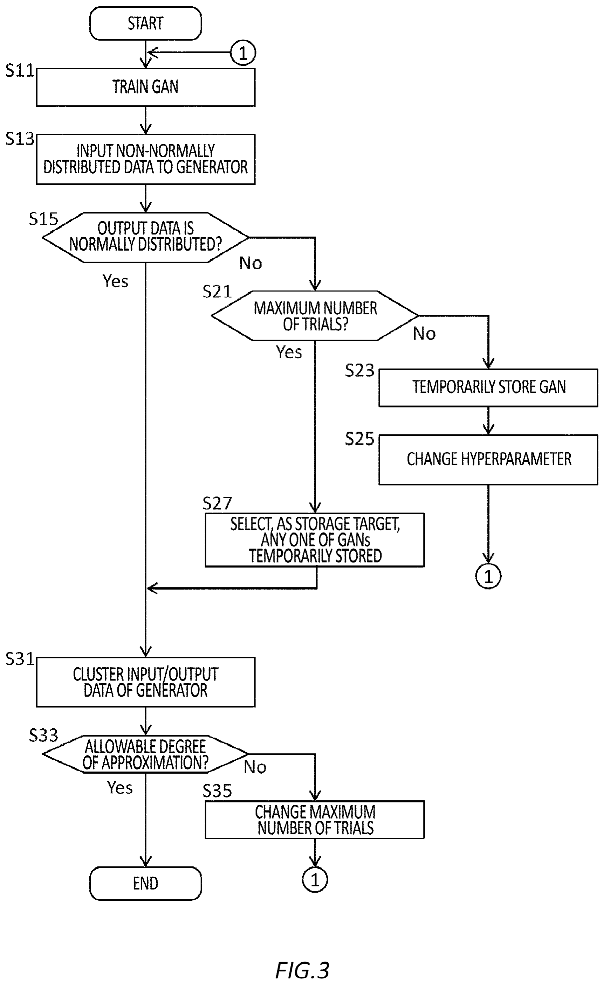

Fig. 3 illustrates an operation of the apparatus 1. The apparatus 1 may perform training processing of the GAN model 125 by performing processing of steps S11 to S35. Note that, in the present operation, a case where each unit of the processor 11 is implemented by the program 120 based on PYTHON (registered trademark) will be described as an example.

In step S11, the training processing unit 113 performs training processing of the generator 1251 and the discriminator 1252 of the GAN model 125. The training processing unit 113 may train each of the generator 1251 and the discriminator 1252 by a generative adversarial networks (GAN). The training processing unit 113 may perform the training processing of the GAN model 125 stored in the storage unit 12.

The training processing unit 113 may perform the training processing such that a value of a loss function of each of the generator 1251 and the discriminator 1252 decreases. The loss functions of the generator 1251 and the discriminator 1252 may be based on PyTorch's BCELoss (binary cross-entropy loss) as an example. An Adam optimizer may be used to update parameters of the generator 1251 and the discriminator 1252.

In the training of the generator 1251, the training processing unit 113 may perform training such that a value of a loss function including a regularization term corresponding to a distance between the input data to the generator 1251 and the output data from the generator 1251 decreases. The regularization term may be multiplied by a regularization coefficient such as reg_lambda (0.1 as an example).

In the training of the discriminator 1252, from a discrimination result of the discriminator 1252 with respect to normally distributed data added with a real label (also referred to as real data) and data generated by the generator 1251 and added with a fake label (also referred to as fake data), the training processing unit 113 may calculate a sum of a loss for evaluating whether the real data can be discriminated as normally distributed (loss_D_real) and a loss for evaluating whether the fake data can be discriminated as not normally distributed (loss_D_fake). The training processing unit 113 may update the parameter of the discriminator 1252 based on the sum of losses by back propagation. The normally distributed real data may be acquired using a torch.randn function which generates a random number according to a standard normal distribution.

Note that the processing in step S11 may be repeatedly executed via the processing of step S25 or S35 described later. When the processing of step S11 is performed first, the generator 1251 and the discriminator 1252 may be implemented using a PyTorch framework which is a deep learning framework for PYTHON (registered trademark). When the processing of step S11 is performed for a second time or later, the training processing unit 113 may further perform training processing on the GAN model 125 for which the training processing has already been performed in the previous step S11.

Here, the generator 1251 may have an input layer and an output layer of a same number of nodes (that is, a number of at least one dimension) as a number of types of the feature data, and two fully connected hidden layers, and may be trained such that feature data for each type sequentially input for each node of the input layer is transformed into normally distributed data and sequentially output from any node of the output layer. Even when the feature data is input only to some nodes of the input layer, the generator 1251 may be trained to transform the data into normally distributed data and output the data from some nodes of the output layer. The fully connected hidden layer may be a layer in which all neurons (also referred to as nodes) of the layer are connected to all neurons of a previous layer, and may learn all interrelationships between input and output. By having such a fully connected layer, a complicated non-linear relationship can be learned. A ReLU activation function, which is a non-linear function which outputs, when the input is a positive value, the value as it is and outputs 0 when the input is a negative value, may be applied to each layer of the hidden layer. Accordingly, it is possible to speed up the calculation in the training stage, mitigate a vanishing gradient problem, and efficiently generate the generator 1251.

In addition, the discriminator 1252 may has an input layer of a same number of nodes (that is, a number of at least one dimension) as a number of types of the feature data, two fully connected hidden layers, and an output layer with a single node. A LeakyReLU activation function, which is a non-linear function which outputs, when an input is less than 0, a value obtained by multiplying the input by α (basically 0.01) and outputs, when an input is 0 or more, the input as it is, may be applied to each layer of the hidden layer. By applying the LeakyReLU activation function, it is possible to prevent death of neurons and stabilize training. A sigmoid function, which transforms an input value into a numerical value in a range of 0.0 to 1.0 and outputs the numerical value, may be applied to the output layer. An output value of the output layer may indicate a probability that the input data is normally distributed.

In step S13, the second determination unit 114 inputs non-normally distributed input data to the generator 1251. As an example, the second determination unit 114 may read non-normally distributed input data from a CSV file of the storage unit 12 by using a read_csv function in the Pandas library for data analysis. The second determination unit 114 may acquire input data transformed into a float32 type by using an array function of NumPy (NUMERICAL PYTHON (registered trademark)) and input the input data to the generator 1251. The second determination unit 114 may acquire a same number of pieces of non-normally distributed data as a number of types of features, and may input, to the generator 1251, input data in which these pieces of data are collected. As an example, the second determination unit 114 may input, to the generator 1251, input data in which vectors each including, as an element, a value of each piece of data that is not normally distributed are collected, and may input separate data (that is, data of separate indexes in the vector) to each node of the input layer of the generator 1251. Accordingly, output data is output from the generator 1251.

In step S15, the second determination unit 114 determines whether or not the output data from the generator 1251 is normally distributed. As an example, the second determination unit 114 may determine that the output data is normally distributed, in accordance with a p value exceeding a threshold (for example, 0.01) set in advance in the Kolmogorov-Smirnov test. When output data in which vectors including a plurality of elements are collected is output from the generator 1251, that is, when output data is output from a plurality of nodes in the output layer of the generator 1251, the second determination unit 114 may determine whether or not all data for each node is normally distributed.

If it is determined that the output data is normally distributed (step S15; Yes), the processing may proceed to step S31. If it is determined that the output data is not normally distributed (step S15; No), the processing may proceed to step S21.

In step S21, the second determination unit 114 determines whether or not the training processing in step S11 has been performed for the maximum number of trials. The maximum number of trials may be an upper limit value of a number of times the processing of step S11 is performed. The maximum number of trial may be set in advance to an arbitrary number and may be changed by step S35 described later. If it is determined that the training processing has been performed for the maximum number of trials (step S21; Yes), the processing may proceed to step S27. If it is determined that the training processing has not been performed for the maximum number of trials (step S21; No), the processing may proceed to step S23.

In step S23, the second determination unit 114 temporarily stores, in the storage unit 12, the generator 1251 and the discriminator 1252 of the GAN model 125 generated by the training processing in the latest step S11. The second determination unit 114 may store the p value calculated in the determination of step S15 in the storage unit 12 in association with the GAN model 125. When output data including a plurality of pieces of data is output from the generator 1251, that is, when output data is output from a plurality of nodes in the output layer of the generator 1251, the second determination unit 114 may store a mean of p values of the data for respective nodes, or may store a smallest p value among the p values of the data for respective nodes.

In step S25, the change unit 115 changes a hyperparameter in the training. The change unit 115 may change at least one of a learning rate, a number of at least one epoch, a number of at least one dimension of a hidden layer, or the like. As an example, the change unit 115 may stepwise increase the number of at least one epoch and the number of at least one dimension of the hidden layer every time the processing in step S25 is performed. When the processing of step S25 ends, the processing may proceed to step S11 described above. Accordingly, the training processing of the GAN model 125 may be performed according to the changed hyperparameter.

In step S27, the second determination unit 114 selects, as a storage target, any one of the GAN models 125 temporarily stored so far by the processing in step S25. In the present embodiment, as an example, the second determination unit 114 may set, as the storage target, the GAN model 125 associated with a largest p value, in other words, the GAN model 125 in which training has progressed the most among the temporarily stored GAN models 125. The second determination unit 114 may store the selected GAN model 125 in the storage unit 12. Accordingly, among a plurality of temporarily stored GAN models 125, the GAN model 125 having a highest probability that output data is normally distributed is stored in the storage unit 12. The second determination unit 114 may delete each GAN model 125 temporarily stored in the storage unit 12. When the processing of step S27 ends, the processing may proceed to step S31.

In step S31, the second determination unit 114 clusters each of the input data and the output data of the generator 1251 in the GAN model 125 stored in the storage unit 12. The second determination unit 114 may acquire the input data and the output data in a similar manner to step S13 described above and cluster each of the input data and the output data. In the present embodiment, as an example, the second determination unit 114 may cluster vectors included in the input data and the output data. The second determination unit 114 may perform clustering after performing dimensionality reduction on vectors in the input data and the output data by t-SNE or the like.

In step S33, the second determination unit 114 determines whether or not a degree of approximation between cluster structures indicated by a result of clustering is greater than or equal to an allowable degree of approximation. If it is determined that the degree of approximation is greater than or equal to the allowable degree of approximation (step S33; Yes), the training of the GAN model 125 ends, and the apparatus 1 may end the operation. If it is determined that the degree of approximation is less than the allowable degree of approximation (step S33; No), the processing may proceed to step S35. Note that, instead of determining whether or not the degree of approximation is greater than or equal to the allowable degree of approximation, the second determination unit 114 may output the result of clustering to the user and determine whether or not a user operation indicating that the degree of approximation is greater than or equal to the allowable degree of approximation is performed.

In step S35, the change unit 115 changes the maximum number of trials of training. The change unit 115 may increase or decrease the maximum number of trials. When the processing of step S35 ends, the processing may proceed to step S11 described above. Accordingly, the generator 1251 and the discriminator 1252 are retrained based on the degree of approximation between the cluster structures of the input data and the output data.

### ((Correction of feature data))

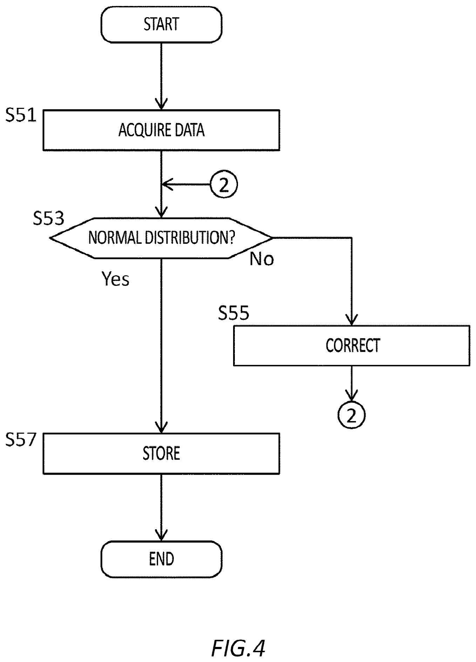

Fig. 4 illustrates another operation of the apparatus 1. The apparatus 1 stores normally distributed feature data in the data file 121 by performing the processing of steps S51 to S57.

In step S51, the acquisition unit 110 acquires a feature of each subject detected from an image of a subject that is a cell or a microorganism. The acquisition unit 110 may acquire a plurality of types of features for each subject. In the present embodiment, as an example, the acquisition unit 110 may acquire, for each image and for each type of feature, feature data including a plurality of features of the type for each of a plurality of subjects in the image.

In step S53, the first determination unit 111 determines whether or not distributions of the plurality of features acquired in step S51 follow a normal distribution. The first determination unit 111 may determine, for each type of feature, whether or not all the distributions of the plurality of features included in the feature data follow a normal distribution. The first determination unit 111 may make a determination using at least one of the Shapiro-Wilk test, the Kolmogorov-Smirnov test, the Anderson-Darling test, the D'Agostino's K-squared test, the Jarque-Bera test, or the Lillifors test.

If it is determined that the distributions of the plurality of features included in the feature data follow a normal distribution (step S53; Yes), the processing may proceed to step S57. If it is determined that the distributions of the plurality of features included in the feature data do not follow a normal distribution (step S53; No), the processing may proceed to step S55.

In step S55, the correction unit 112 corrects the plurality of features such that the distributions of the plurality of features acquired in step S11 follow a normal distribution. The correction unit 112 may correct a plurality of features in the feature data determined not to follow a normal distribution, among the feature data acquired in step S51. The outlier removal unit 1121 of the correction unit 112 may perform correction by removing outliers for the plurality of features. The normalization unit 1122 of the correction unit 112 may perform correction by transformation using the generator 1251, or may perform correction by at least one of logarithmic transformation, square root transformation, Box-Cox transformation, reciprocal transformation, rank transformation, or Yeo-Johnson transformation. When correction is performed by the transformation using the generator 1251, the normalization unit 1122 may supply each type of feature data determined not to be normally distributed, to a separate node in the input layer of the generator 1251, and acquire normally distributed feature data for each type, from each node in the output layer of the generator 1251.

When the processing of step S55 ends, the processing may proceed to step S53 described above. Accordingly, when it is determined in the processing of step S53 that a distribution of the feature does not follow a normal distribution, the processing of step S55 is performed again. As a result, the correction processing in step S55 is repeated until it is determined by the processing in step S53 that the distributions of the plurality of features in the feature data follow a normal distribution. Note that, when the processing of step S55 is repeated, the correction unit 112 may perform correction by different methods in each processing of step S55. Accordingly, the distributions of the features reliably follow a normal distribution.

In step S57, the first determination unit 111 stores, in the data file 121, the feature data determined as normally distributed.

According to the above operation, the correction processing is repeated until it is determined that the distributions of the plurality of features follow a normal distribution. Therefore, the distributions of the features can be reliably corrected to a normal distribution.

### (Operation example)

### ((Preparation of subject group))

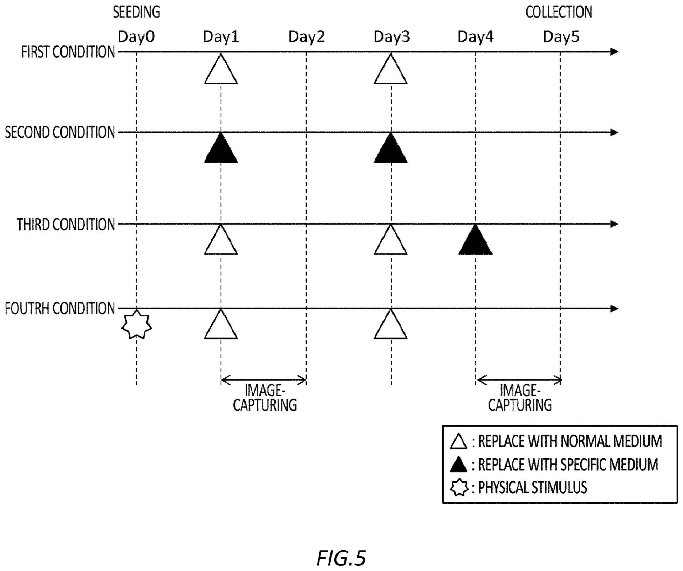

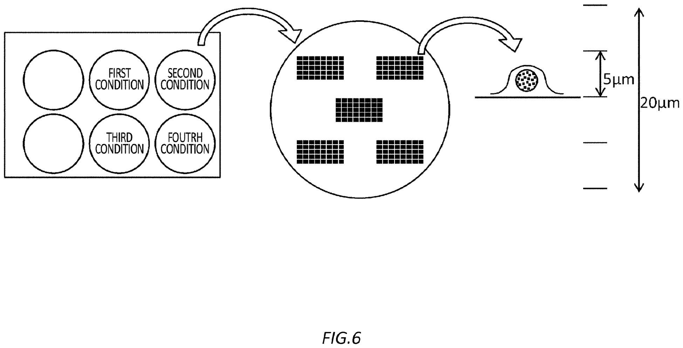

Fig. 5 illustrates a method of generating a subject group. In the present operation example, iPS cells (201B7 strain) as a subject were cultured under following first to fourth conditions. Culturing was performed in separate wells in a same well plate (see Fig. 6 described later). Note that in the present operation example, a classification of a cell group varies depending on culture conditions.

### (((First condition)))

A general maintenance culture method for iPS cells was used to perform culture for 5 days. On Day 1 and Day 3, a medium was replaced with a general medium.

### (((Second condition)))

Culture was performed in a manner similar to that in the first condition except that the medium was replaced with an inactivation medium on Day 1 and Day 3 and the culture was performed in a poor nutrition state. As the inactivation medium, STEMFIT (registered trademark) medium heat-treated at 56°C for 30 minutes was used.

### (((Third condition)))

Culture was performed in a manner similar to that in the first condition except that the medium was replaced with a differentiation promoting medium on Day 4. As the differentiation promoting medium, Dulbecco's modified Eagle's medium containing 10% fetal bovine serum, 1% non-essential amino acids for minimum essential medium, and 1% GlutaMax was used.

### (((Fourth condition)))

Culture was performed in a manner similar to that in the first condition except that a physical stimulus of performing 20 pipettings was applied to a cell suspension to be seeded.

### ((Image-capturing))

Fig. 6 illustrates a method of capturing a subject group. In the present operation example, the cell group was captured with a microscope on Days 1 to 2 and Days 4 to 5 of the culture under each condition. Image-capturing was performed 20 times at one-hour intervals.

Image-capturing was performed on a total of 200 capturing regions (black rectangular regions in the drawing) in the well by using an "image cytometer CellVoyager CQ-1" (manufactured by Yokogawa Electric Corporation) equipped with a 20× high numerical aperture objective lens. In each capturing region, five images were captured by moving a focal plane by 5 µm in a height direction (also referred to as a z axis direction). Using image analysis software "CellPathfinder" (manufactured by Yokogawa Electric Corporation), a bright-field image with enhanced contrast was generated from the five pieces of image data for each capturing region. Note that in a right part of the drawing, an example of a relationship between a height of the cells on the well plate and an interval between focal planes is shown.

### ((Acquisition of feature data (1)))

For the acquired image, individual cells were recognized in the images using using a DeepAreaFinder function of the "CellPathfinder" (manufactured by Yokogawa Electric Corporation), and feature data of compactness measure and feature data of circularity were acquired. For each feature data, the first determination unit 111 determined whether or not a distribution of values follows a normal distribution, by the Shapiro-Wilk test, the Kolmogorov-Smirnov test, and the D'Agostino's K-squared test.

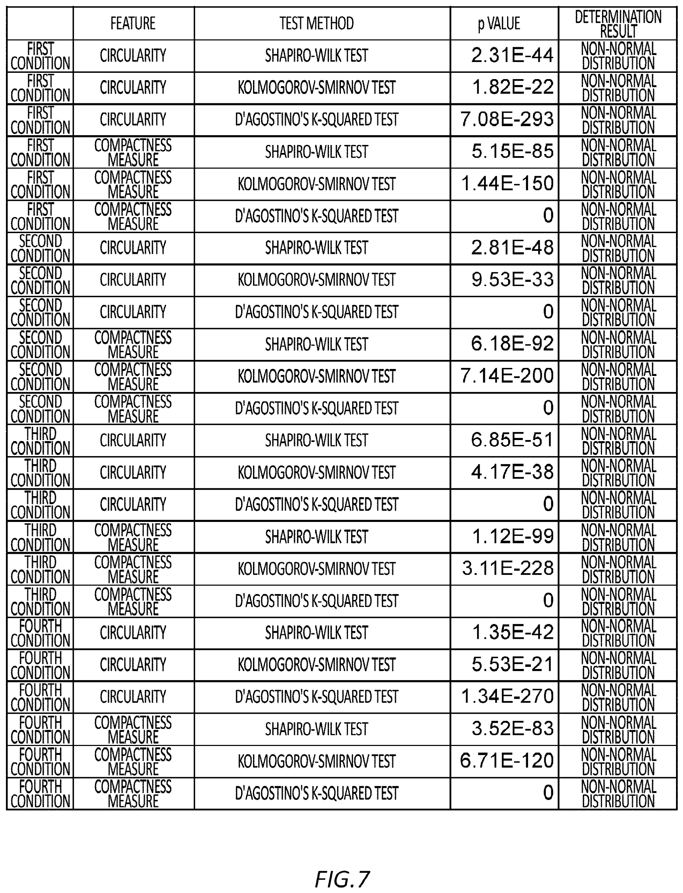

Fig. 7 illustrates a determination result of a distribution of a feature acquired for cells cultured under each condition. Note that in this drawing, a p value calculated by each test is also shown. As illustrated in this drawing, the distribution for any feature followed a non-normal distribution.

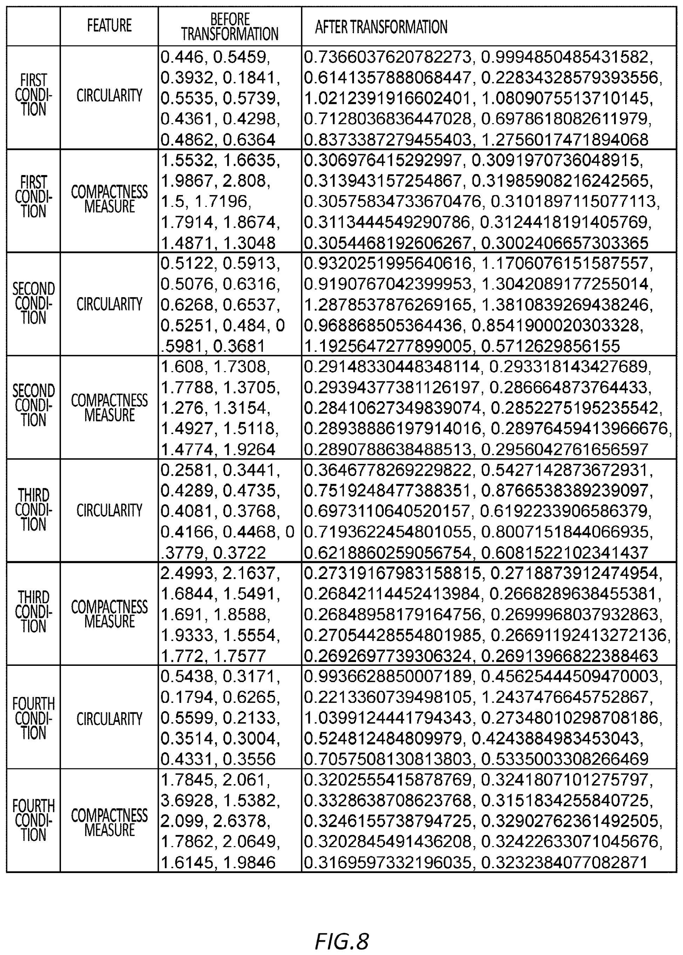

Subsequently, the correction unit 112 performs Yeo-Johnson transformation on each acquired feature data. Fig. 8 illustrates features before and after transformation by Yeo-Johnson transformation. Note that, in this drawing, 10 values randomly sampled from the feature data before transformation and values after transformation for the 10 values are illustrated.

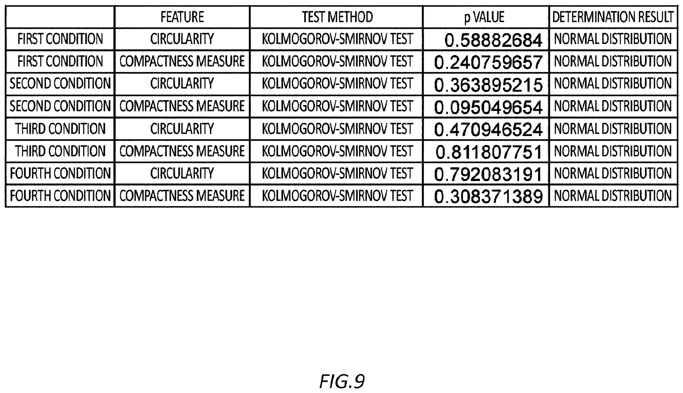

For each of the transformed feature data, the first determination unit 111 determined whether or not a distribution of values follows a normal distribution, by the Kolmogorov-Smirnov test. Fig. 9 illustrates a determination result of the distribution of the transformed feature. As illustrated in this drawing, the distribution for any feature followed a normal distribution.

### ((Acquisition of feature data (2)))

For the acquired image, nuclei of individual cells were recognized in the imaged using the DeepAreaFinder function of the "CellPathfinder" (manufactured by Yokogawa Electric Corporation), and float32-type feature data of a feature of an area of the nuclei and a feature of circularity of the nuclei was acquired as a csv file.

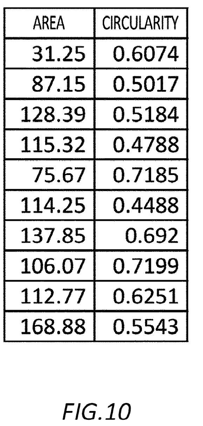

Fig. 10 illustrates feature data of the area and the circularity. Note that, in this drawing, 10 values randomly sampled from the feature data are illustrated.

For each piece of feature data, the first determination unit 111 determined whether or not a distribution of values follows a normal distribution, by the Shapiro-Wilk test, the Kolmogorov-Smirnov test, and the D'Agostino's K-squared test, and as a result, the distribution for any feature followed a non-normal distribution.

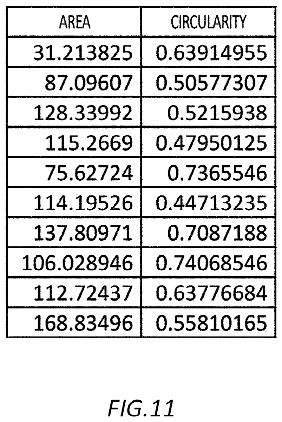

Subsequently, the correction unit 112 performs transformation using the generator 1251 on each acquired feature data. Fig. 11 illustrates a feature after transformation. Note that, in this drawing, 10 values randomly sampled from the transformed feature data are illustrated.

For each of the transformed feature data, the first determination unit 111 determined whether or not a distribution of values follows a normal distribution, by the Kolmogorov-Smirnov test, and as a result, the distribution for any feature value followed a normal distribution.

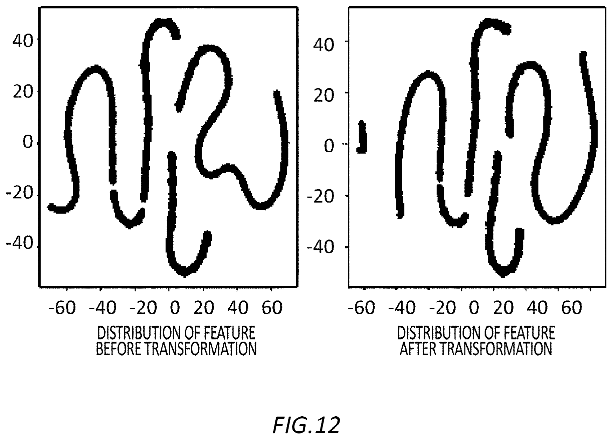

Subsequently, distribution states of the feature data before and after the transformation by the generator 1251 were clarified by t-SNE, and distributions of feature vectors were confirmed. Fig. 12 illustrates distributions of the feature data before and after the transformation. As illustrated in this drawing, the distribution state of the feature data and the cluster structure are also maintained by the transformation using the generator 1251.

### (Texture of subject)

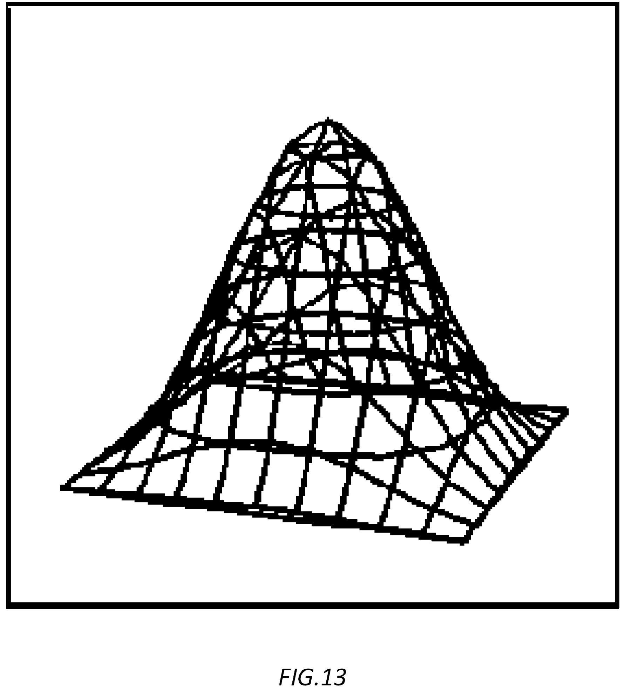

Fig. 13 illustrates a tip shape of a subject.

Note that, in Figs. 13 to 18, an outer shape of the subject is illustrated in a mesh-like pattern, the image capturing direction is a vertical direction, and a plane perpendicular to the image capturing direction is illustrated by a white rectangle.

The tip shape may be a shape protruding in a conical shape in the image capturing direction. A tip-shaped texture (Peak) may arise from the tip shape, and luminance may change as a distance from a center point increases.

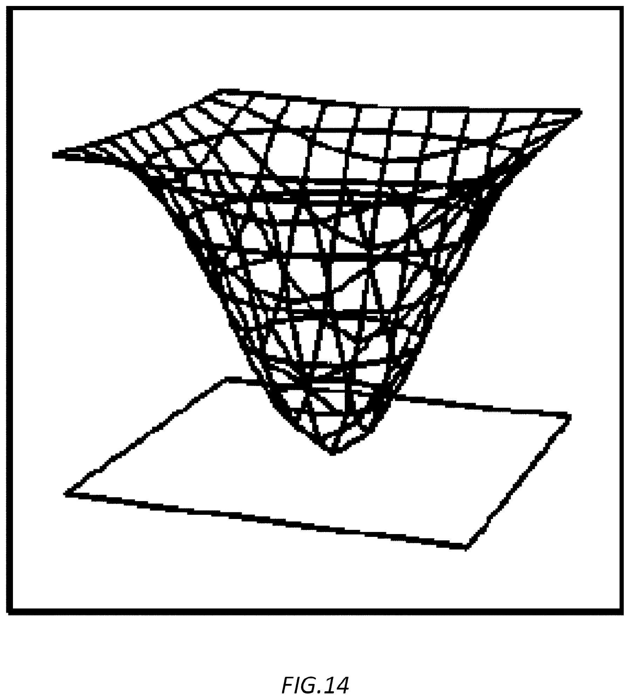

Fig. 14 illustrates a hole shape of a subject. The hole shape may be a shape recessed in a conical shape in the image capturing direction. A hole-shaped texture (Hole) may arise from the hole shape, and the luminance may change as a distance from a center point increases.

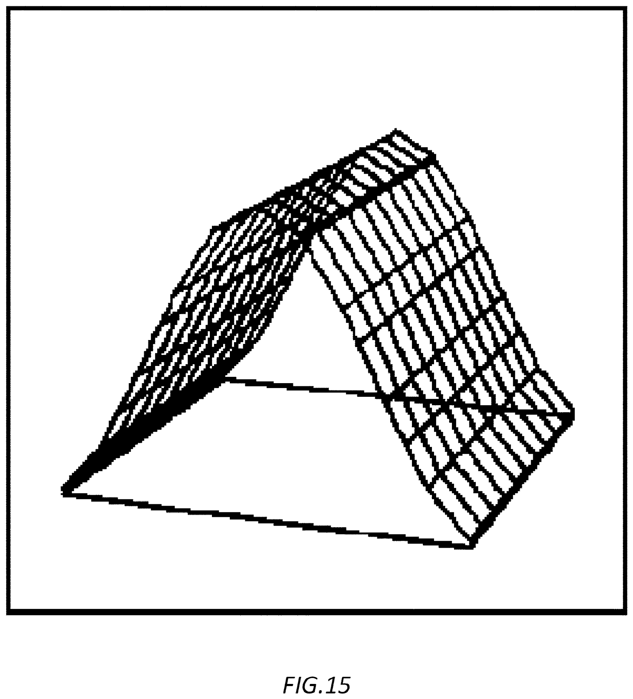

Fig. 15 illustrates a ridge shape of a subject. The ridge shape may be a ridge-like protrusion in the image capturing direction. A ridge-shaped texture (Ridge) may arise from by the ridge shape, and the luminance may change as a distance from a center line (that is, a ridge line or a crest line) increases.

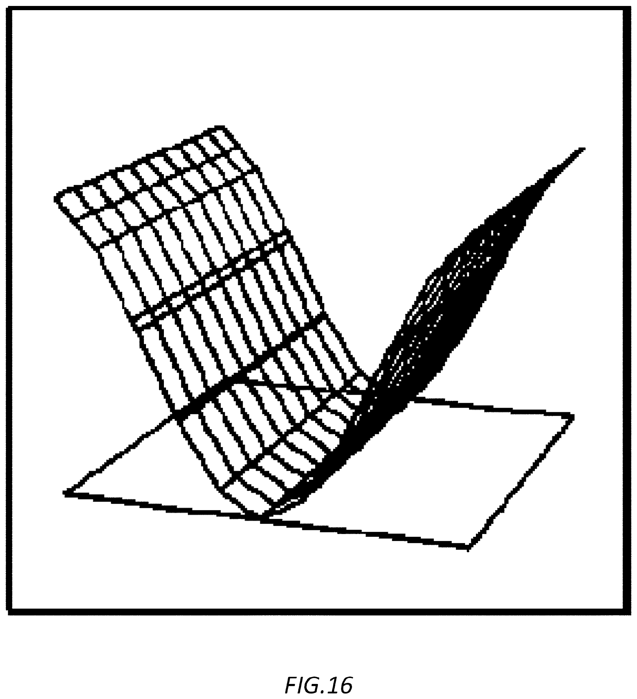

Fig. 16 illustrates a valley shape of a subject. The valley shape may be a shape recessed in a valley shape in the image capturing direction. A valley-shaped texture (Valley) may arise from the valley shape, and the luminance may change as a distance from a center line (that is, a valley line) increases.

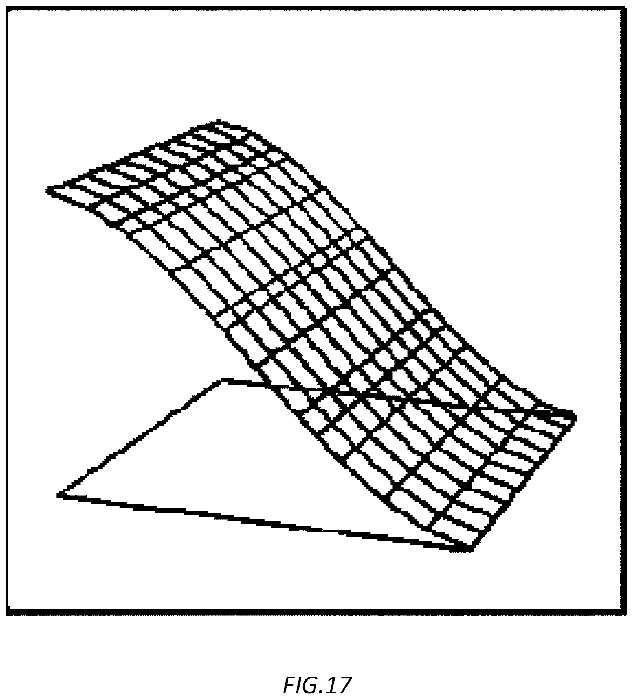

Fig. 17 illustrates an edge shape of a subject. The edge shape may be a shape of an end portion of the subject. An edge-shaped texture (Edge) may arise from the edge shape, and may be a texture in which the luminance changes toward the end portion of the subject.

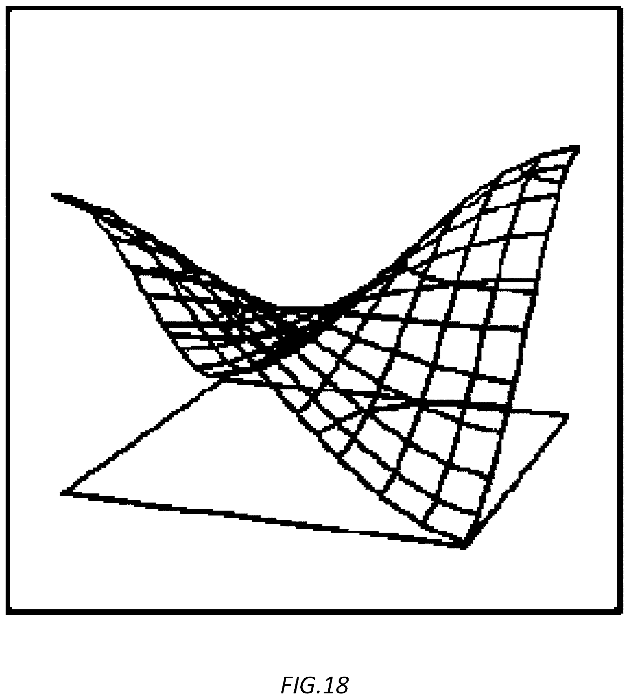

Fig. 18 illustrates a saddle shape of the subject. The saddle shape may be a shape having curvatures in two directions like a horse saddle among shapes recessed in the image capturing direction. In the drawing, a curvature in a depth direction and a curvature in a right-left direction are different. A saddle-shaped texture (Saddle) may arise from the saddle shape, and may be a texture in which the luminance changes as a distance from a center portion of the subject increases and a change in the luminance is anisotropic.

### (Modification)

Note that, in the above-described embodiment, the acquisition unit 110 has been described as performing image analysis to acquire a data group, but may acquire a data group generated by external equipment.

In addition, the processor 11 of the apparatus 1 has been described as implementing the training processing unit 113, the second determination unit 114, and the change unit 115, but may not implement any of these. When the processor 11 does not implement the training processing unit 113, the storage unit 12 may acquire the generator 1251 of the trained GAN model 125 from an external apparatus and store the generator 1251. In addition, when the processor 11 does not implement the training processing unit 113, the second determination unit 114 and the change unit 115 may also not be implemented. When the processor 11 does not implement the change unit 115, the generator 1251 and the discriminator 1252 may be retrained without changing the setting content of the training processing.

In addition, the correction unit 112 has been described as including the outlier removal unit 1121, but may not include the outlier removal unit 1121. In this case, the correction unit 112 may correct a plurality of features to follow a normal distribution by the normalization unit 1122.

In addition, the apparatus 1 has been described as including the image capturing unit 10, the storage unit 12, and the output unit 13, but may not include any of these. When the apparatus 1 does not include the image capturing unit 10, the acquisition unit 110 may acquire an image from an external image capturing apparatus. When the apparatus 1 does not include the storage unit 12, the program 120, the GAN model 125, the data file 121, or the like may be stored in an external storage apparatus.

In addition, the data file 121 has been described as storing the feature data determined to be normally distributed, by the first determination unit 111, but may further store original data determined not to be normally distributed by the first determination unit 111.

In addition, the distribution state of the input data and the output data used for the determination by the second determination unit 114 has been described as a cluster structure, but another distribution state may be used. For example, the distribution state of the data may be a linear or non-linear pattern indicated by elements of a vector, may be continuity of the elements of the vector, may be a correlation between the elements, or may be a degree of dispersion of vectors. The second determination unit 114 may determine whether or not a degree of approximation between known index values indicating distribution states of the data to be used is greater than or equal to an allowable degree of approximation.

In addition, the reference distribution of the feature has been described as a normal distribution, but another distribution may be used. Also in this case, the distribution state can be equalized for each image, so that the subject group can be appropriately evaluated.

In addition, although cells and microorganisms as subjects have been described as dispersed in a plane or a space, an aggregate of tissues or the like may be formed in a sheet shape or a lump shape. In addition, although a subject has been described as a cell or a microorganism, a type of the subject is not limited thereto. For example, the subject may be a food, a tablet, a seed, an electronic component, or the like, and may be captured in an aggregated state.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer readable media, and/or processors supplied together with computer-readable instructions stored on computer readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a FLOPPY (registered trademark) disk, a diskette, a hard disk, a random access memory (RAM), a read only memory (ROM), an erasable programmable read only memory (EPROM or a flash memory), an electrically erasable programmable read only memory (EEPROM), a static random access memory (SRAM), a compact disc read only memory (CD-ROM), a digital versatile disk (DVD), a BLU-RAY (registered trademark) disk, a memory stick, an integrated circuit card, and the like.

A computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as SMALLTALK (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer (PC), a tablet computer, a smartphone, a workstation, a server computer, or a computer such as a general purpose computer or a special purpose computer, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a part of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multiprocessor system including a plurality of processors, the plurality of processors collectively execute a program by each of the processors executing a part of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processors is responsible for executing may be determined statically by multiprocessor-aware programming.

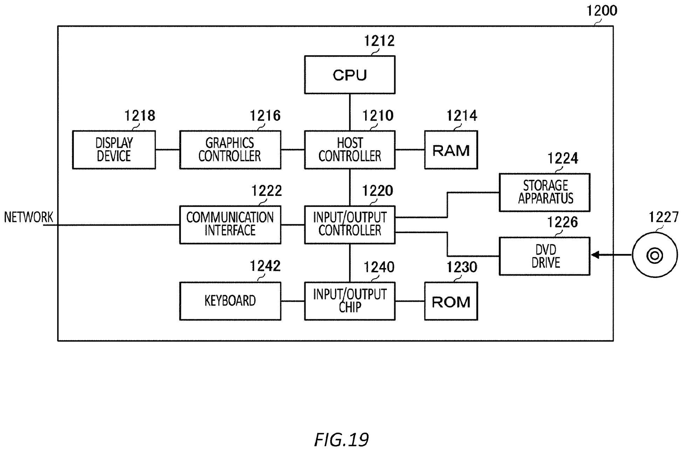

Fig. 19 illustrates an example of a computer 1200 in which a plurality of aspects of the present invention may be embodied in whole or in part. A program that is installed in the computer 1200 may cause the computer 1200 to function as operations associated with an apparatus according to the embodiment of the present invention or one or more sections in the apparatus, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes a communication interface 1222, a storage apparatus 1224 such as a hard disk drive, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The storage apparatus 1224 stores a program and data used by the CPU 1212 in the computer 1200. The DVD-ROM drive 1226 reads the programs or the data from a DVD-ROM 1227, and provides the programs or the data to the storage apparatus 1224 via the RAM 1214. The IC card drive reads programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer readable medium such as the DVD-ROM 1227 or the IC card. The programs are read from the computer readable medium, are installed in the storage apparatus 1224, the RAM 1214, or the ROM 1230, which are also an example of the computer readable medium, and are executed by the CPU 1212. Information processing written in these programs is read by the computer 1200, and provides cooperation between the programs and the various types of hardware resources described above. An apparatus or method may be constructed by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing described in the communication program. The communication interface 1222, under the control of the CPU 1212, reads transmission data stored in a transmission buffering region provided in a recording medium such as the RAM 1214, the storage apparatus 1224, the DVD-ROM 1227, or the IC card, transmits the read transmission data to the network, or writes reception data received from the network to a reception buffering region or the like provided on the recording medium.

In addition, the CPU 1212 may cause the RAM 1214 to read all or a necessary part of a file or database stored in an external recording medium such as the storage apparatus 1224, the DVD-ROM drive 1226 (DVD-ROM 1227), the IC card, or the like, and may execute various types of processing on data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout this disclosure and designated by an instruction sequence of programs, and writes the result back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predetermined condition.

The above-described program or software module may be stored in the computer readable medium on the computer 1200 or near the computer 1200. In addition, a recording medium such as a hard disk or a RAM provided in a server system connected to a dedicated communication network or the Internet may be used as the computer readable medium, thereby providing the program to the computer 1200 via the network.

While the present invention has been described above by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

1: apparatus;
10: image capturing unit;
11: processor;
12: storage unit;
13: output unit;
110: acquisition unit;
111: first determination unit;
112: correction unit;
113: training processing unit;
114: second determination unit;
115: change unit;
120: program;
121: data file;
125: GAN model;
1121: outlier removal unit;
1122: normalization unit;
1200: computer;
1210: host controller;
1212: CPU;
1214: RAM;
1216: graphics controller;
1218: display device;
1220: input/output controller;
1222: communication interface;
1224: storage apparatus;
1226: DVD-ROM drive;
1227: DVD-ROM;
1230: ROM;
1240: input/output chip;
1242: keyboard;
1251: generator; and
1252: discriminator.

## Claims

1. An apparatus comprising
a processor, wherein
the processor performs
acquisition processing of acquiring a feature of each subject detected from an image of a subject that is a cell or a microorganism,
first determination processing of determining whether or not distributions of a plurality of features, including the feature, follow a reference distribution, and
correction processing of correcting the plurality of features so as to follow the reference distribution, when the distributions of the plurality of features do not follow the reference distribution.

2. The apparatus according to claim 1, wherein the reference distribution is a normal distribution.

3. The apparatus according to claim 2, wherein in the first determination processing, a determination is made using at least one of a Shapiro-Wilk test, a Kolmogorov-Smirnov test, an Anderson-Darling test, a D'Agostino's K-squared test, a Jarque-Bera test, or a Lillifors test.

4. The apparatus according to claim 2 or 3, wherein
in the correction processing,
correction is performed for the plurality of features by at least one of logarithmic transformation, square root transformation, Box-Cox transformation, reciprocal transformation, rank transformation, Yeo-Johnson transformation, or transformation using a generator which is generated using a GAN and generates output data following the reference distribution from input data not following the reference distribution.

5. The apparatus according to claim 4, wherein
the processor
repeats the correction processing until it is determined by the first determination processing that the distributions of the plurality of features follow the reference distribution.

6. The apparatus according to claim 4 or 5, wherein in the correction processing, correction is further performed by removing outliers for the plurality of features.

7. The apparatus according to any one of claims 4 to 6, wherein
the processor
further performs training processing in which the generator and a discriminator which discriminates whether or not the output data follows the reference distribution are each trained by the GAN.

8. The apparatus according to claim 7, wherein
the processor
further performs second determination processing of determining, by a predetermined test, whether or not output data, which is output from the generator in response to input data not following the reference distribution being supplied to the generator, follows the reference distribution, and
the generator and the discriminator are retrained by the training processing based on a determination result by the second determination processing.

9. The apparatus according to claim 8, wherein the processor performs change processing of changing a hyperparameter in training when retraining the generator and the discriminator.

10. The apparatus according to claim 8 or 9, wherein when it is determined by the second determination processing that the output data follows the reference distribution, the processor retrains the generator and the discriminator based on a degree of approximation of distribution states of the input data and the output data of the generator.

11. The apparatus according to any one of claims 7 to 10, wherein in the training processing, the generator is trained such that a value of a loss function including a regularization term corresponding to a distance between input data to the generator and output data from the generator decreases.

12. The apparatus according to any one of claims 1 to 11, wherein
in the acquisition processing, a plurality of types of features are acquired for each subject,
in the first determination processing, a determination is made for each type of feature, and
in the correction processing, a plurality of features of a type not following the reference distribution, among a plurality of features of each type, are corrected.

13. A method comprising:
acquiring a feature of each subject detected from an image of a subject that is a cell or a microorganism;
performing a first determination by determining whether or not distributions of a plurality of features, including the feature, follow a reference distribution; and
correcting the plurality of features so as to follow the reference distribution, when the distributions of the plurality of features do not follow the reference distribution.

14. A program which, when executed by a computer, causes the computer to perform operations comprising:
acquiring a feature of each subject detected from an image of a subject that is a cell or a microorganism;
performing a first determination by determining whether or not distributions of a plurality of features, including the feature, follow a reference distribution; and
correcting the plurality of features so as to follow the reference distribution, when the distributions of the plurality of features do not follow the reference distribution.
